# FASCICULE DE BREVET EUROPEEN

(11) **EP 0 742 120 B1**
(45) Date de publication et mention de la délivrance du brevet: **04.10.2001**
(21) Numéro de dépôt: 96400941.9
(22) Date de dépôt: 03.05.1996
(51) Int. Cl.: B60R 9/048

(54) **Dispositif d'arrimage d'une charge sur un véhicule automobile**
Vorrichtung zur Sicherung von Lasten auf einem KFZ
Device for securing a load on a motor vehicle

(30) Priorité: 12.05.1995 FR 9505632
(43) Date de publication de la demande: 13.11.1996
(73) Titulaire: RENAULT, 92109 Boulogne-Billancourt (FR)
(72) Inventeur: Bourdon, Gilles, 60570 Andeville (FR)

(56) Documents cités:
- WO-A-84/00931
- FR-A- 2 479 752
- FR-A- 2 489 766
- US-A- 4 900 203

## Description

L'invention concerne un dispositif d'arrimage d'une charge sur un véhicule automobile constitué d'une barre aux extrémités de laquelle sont raccordés au moins un premier support, qui intègre un enrouleur verrouillable d'une sangle d'arrimage, et un deuxième support muni d'un moyen de réception de ladite sangle d'arrimage, les premier et second supports étant reliés par leurs bases à un véhicule automobile.

De façon habituelle le transport de charge sur un véhicule automobile est réalisé par une galerie de transport de charge composée de deux barres parallèles reliées rigidement au toit du véhicule automobile par l'intermédiaire de supports raccordés à chaque extrémité desdites barres. La charge est alors arrimée aux barres par l'intermédiaire de sangles ou de tendeurs élastiques rapportés.

La publication WO-A-84/00931 décrit une galerie de transport de charge avec au moins un dispositif d'arrimage composé de deux barres parallèles entre lesquelles des ergots fixes ou mobiles sont répartis. Les ergots ainsi disposés permettent d'arrimer une charge en la ceinturant plusieurs fois avec une ou plusieurs sangles.

Les dispositifs d'arrimage des galeries actuellement les plus utilisées sont constitués essentiellement de deux barres parallèles indépendantes l'une de l'autre ce qui rend difficile la possibilité de répartir des ergots d'arrimage entre les deux barres.

De plus la réalisation de plusieurs boucles avec une même sangle, autour de points d'arrimage ou d'une des barres, diminue l'efficacité de la tension exercée à une des extrémités de ladite sangle.

L'utilisation de plusieurs sangles ou tendeurs élastiques oblige à posséder un certain nombre de ceux-ci, ce qui encombre généralement le coffre à bagages du véhicule.

Afin d'effectuer une tension sur la charge, dans le cas de l'utilisation de sangles, il est généralement réalisé un noeud avec ladite sangle autour d'un élément du support de la charge pour conserver l'effort réalisé lors du positionnement de ladite sangle, la qualité du maintien de la charge étant dans ce cas conditionnée par la qualité du noeud.

Des systèmes auxiliaires de tension peuvent être utilisés, dans ce cas la quantité nécessaire est proportionnelle au nombre de sangles utilisées et vient s'ajouter au stockage desdites sangles.

Dans le cas de l'utilisation de tendeurs élastiques, la tension est proportionnelle à l'élongation dudit tendeur rendant difficile le contrôle de l'effort de maintien de la charge. De plus l'utilisation de tendeurs élastiques peut-être la cause d'accidents lors de l'installation de ceux-ci autour de la charge.

Afin de remédier à ces inconvénients, l'invention a pour objet un support de barre porte-charge qui intègre un enrouleur comportant une sangle d'arrimage.

L'invention a également pour objet un support muni d'un moyen de réception et de tension de l'extrémité libre de la sangle.

Selon l'invention, deuxième support comprend un moyen de tension de ladite sangle d'arrimage.

Selon un mode de réalisation de l'invention le moyen de réception et de tension comporte une poignée de manoeuvre formant une continuité de forme avec le deuxième support en position fermée de ladite poignée de manoeuvre.

Selon un autre mode réalisation de l'invention le premier support comporte un élément de guidage de la torsion de la sangle d'arrimage entre l'enrouleur et une fente de sortie de ladite sangle d'arrimage réalisée dans ledit premier support.

Selon un autre mode de réalisation de l'invention l'élément de guidage est constitué de galets.

Selon un autre mode de réalisation de l'invention l'élément de guidage est constitué par une surface hélicoïdale appartenant au corps du premier support.

Selon un autre mode de réalisation de l'invention l'enrouleur comporte un moyen de verrouillage débrayable de la rotation de ce dernier.

Selon un autre mode de réalisation de l'invention l'enrouleur comporte un ressort de rappel de la sangle d'arrimage.

D'autres caractéristiques et avantages de l'invention apparaîtront à la lecture de la description d'exemples de réalisation d'un dispositif d'arrimage en référence au dessin annexé dans lequel :
- la figure 1 représente une vue perspective de l'invention appliquée à un porte-charge lié à un pavillon de véhicule automobile.
- la figure 2 représente une vue perspective du premier support qui comporte un élément de guidage de la sangle constitué de galets.
- la figure 3 représente une vue perspective du premier support qui comporte un élément de guidage de la sangle constitué d'une surface hélicoïdale.
- la figure 4 représente une vue en coupe du deuxième support.

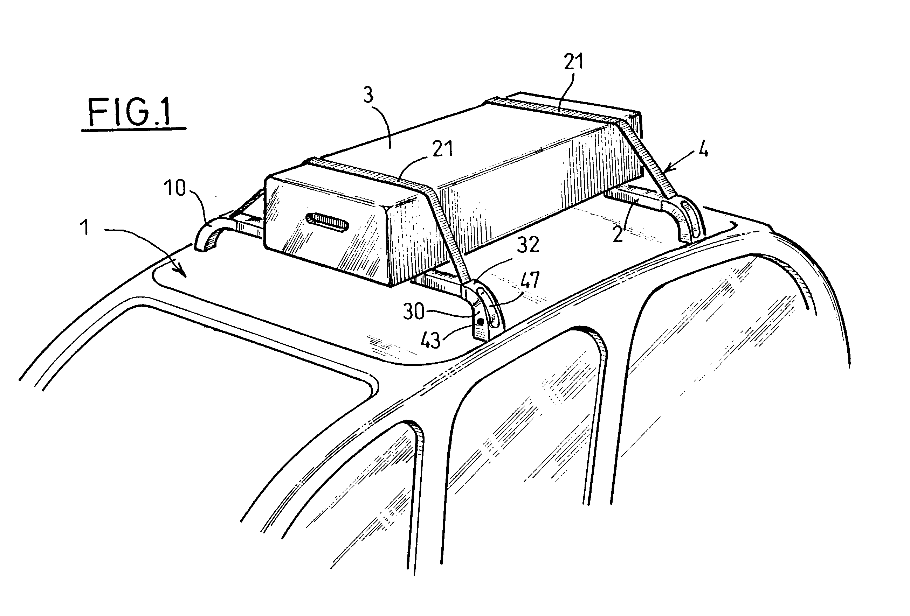

Le dispositif d'arrimage 4, tel que représenté à la figure 1, comporte au moins deux éléments constitués d'une barre transversale 2 raccordée par ses extrémités à un premier support 10 et à un deuxième support 30 reliés par leurs bases à une partie d'un véhicule automobile 1, tel que le pavillon.

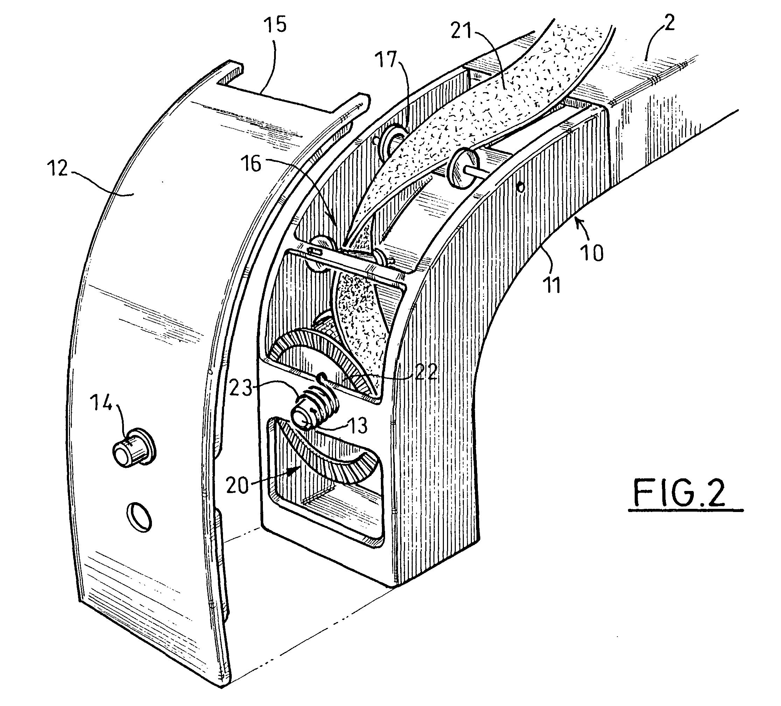

Tel que représenté à la figure 2, le premier support 10 est constitué d'un corps 11 et d'un couvercle 12 maintenus l'un à l'autre par un moyen de fixation, non représenté. Le corps 11 du premier support 10 porte un enrouleur 20 d'une sangle d'arrimage 21 localisé dans une cavité dudit corps 11. L'enrouleur 20 de la sangle d'arrimage 21 est constitué d'une bobine 22 montée à rotation autour d'un axe 13 et reliée au corps 11 par un ressort de rappel 23 de ladite bobine 22. Un moyen de verrouillage débrayable 14 immobilise la bobine 22 sur l'axe de rotation 13.

Le moyen de verrouillage 14 peut-être du type dynamique tel qu'utilisé dans les enrouleurs bloqueurs des ceintures de sécurité.

Le couvercle 12 assemblé sur le corps 11 laisse apparaître une fente de sortie 15 de la sangle d'arrimage 21. Afin d'éviter la torsion de la sangle d'arrimage 21 lors du déroulement de celle-ci et afin de limiter les risques de blocage, le corps 11 du premier support 10 comporte un élément de guidage 16 de la sangle d'arrimage 21 entre l'enrouleur 20 et la fente de sortie 15 de ladite sangle d'arrimage 21.

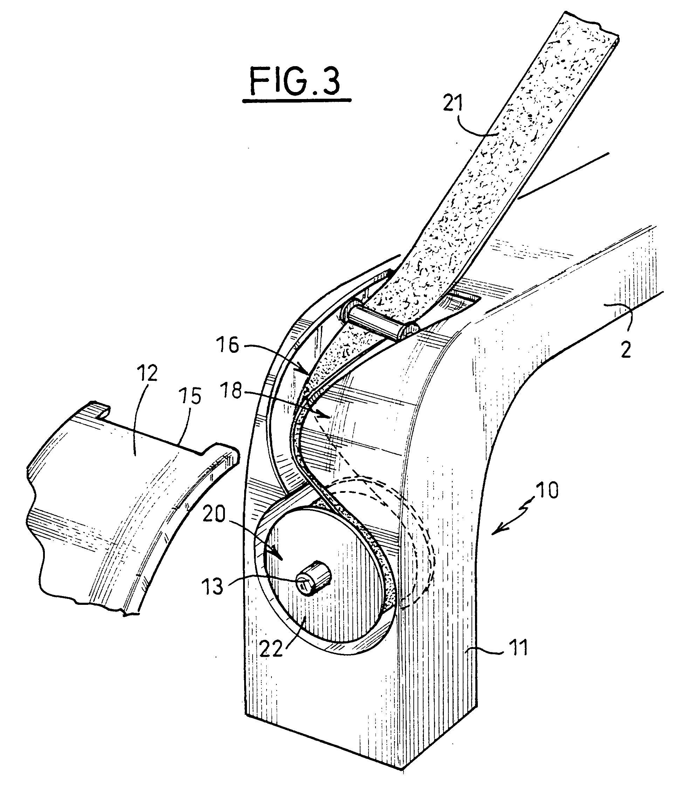

Tel que représenté à la figure 2 l'élément de guidage 16 est constitué d'une suite de galets 17 dont les axes de rotation sont positionnés suivant une surface hélicoïdale. Un autre exemple de réalisation de l'élément de guidage 16 est représenté à la figure 3 celui-ci étant constitué par une surface hélicoïdale réalisée dans le corps 11 du premier support 10.

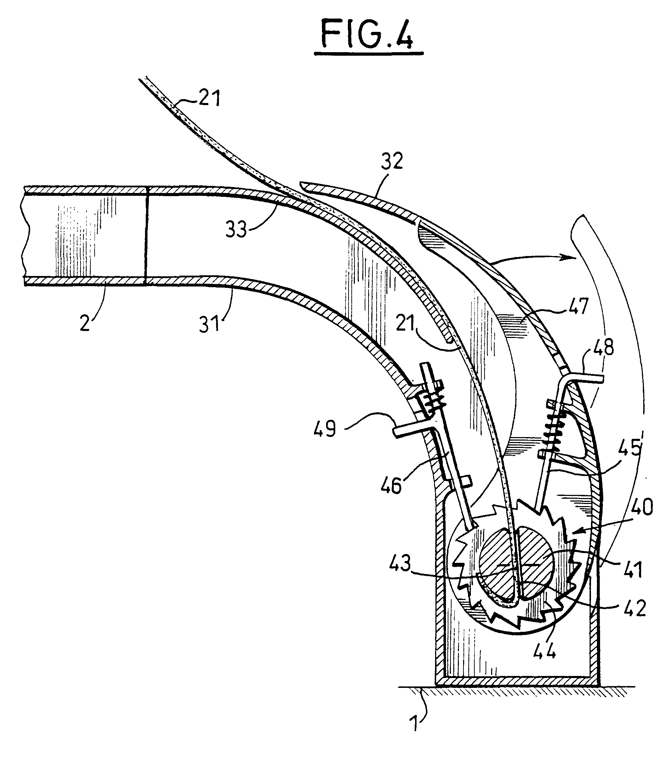

La figure 4 représente le deuxième support 30 qui est constitué d'un corps 31 et d'un couvercle 32 maintenus l'un à l'autre par un moyen de fixation, non représenté. Le corps 31 du deuxième support 30 comporte une surface d'appui 33 de la sangle d'arrimage 21 guidant cette dernière vers un moyen de réception et de tension 40 de ladite sangle d'arrimage 21.

Le moyen de réception et de tension 40 de la sangle d'arrimage 21 est conformé en un cylindre 41 dans lequel est réalisée au moins une fente 42, de réception de ladite sangle 21, radialement débouchante. Le cylindre 41 est monté à rotation autour d'un axe 43 transversalement disposé dans le corps 31 du deuxième support 30 et muni à une de ses extrémités, d'une façon connue en soi, d'une roue crantée 44 à double cliquet 45 et 46. Une poignée de manoeuvre 47 de la roue crantée 44 est montée à articulation autour de l'axe transversal 43 et porte le cliquet 45 d'entraînement de la roue crantée 44.

Le cliquet 45 porté par la poignée de manoeuvre 47 permet l'entraînement de la roue crantée 44 dans un sens unique de rotation lors de l'utilisation de ladite poignée de manoeuvre 47. Le premier cliquet 45 est manoeuvrable par l'intermédiaire d'un bouton de commande 48 pour pouvoir rendre inopérant l'action dudit cliquet 45, en particulier lors de la désolidarisation de la sangle d'arrimage 21 du moyen de réception et de tension 40 de celle-ci. Le bouton de commande 48 possède une position fixe où le cliquet 45 n'est pas en interaction avec la roue crantée 44.

Un second cliquet 46 porté par le corps 31 du deuxième support 30 permet d'autoriser la rotation de la roue crantée 44 que dans le sens où celle-ci est entraînée par la poignée de manoeuvre 47. Le second cliquet 46 est manoeuvrable par l'intermédiaire d'un bouton de commande 49 pour pouvoir rendre possible la libre rotation du cylindre 41. Le bouton de commande 49 possède une position fixe où le cliquet 46 n'est pas en interaction avec la roue crantée 44.

Pour arrimer une charge 3 sur le véhicule automobile 1, on exerce une traction sur la sangle d'arrimage 21 pour dérouler cette dernière sur une longueur suffisante pour ceinturer ladite charge 3, tout en débrayant le moyen de verrouillage 14 de la bobine 22 permettant ainsi la rotation de celle-ci autour de l'axe 13. Lorsque la longueur de sangle 21 désirée est obtenue on actionne le moyen de verrouillage 14 afin de rendre impossible la rotation de la bobine 22. La sangle est automatiquement verrouillée dans le cas de l'utilisation d'un verrouillage dynamique.

Pour effectuer la tension de la sangle d'arrimage 21 un pivotement de la poignée 47 est réalisé, autour de l'axe 43, afin de donner accès au moyen de réception et de tension 40 de ladite sangle d'arrimage 21, l'extrémité de ladite sangle d'arrimage 21 est alors placée dans la fente de réception 42. L'actionnement de la poignée 47 suivant un mouvement de pivotement alternatif autour de l'axe 43 entraîne, par la coopération du cliquet 45 et de la roue crantée 44, la rotation du cylindre 41 autour du même axe 43 enroulant ainsi la sangle 21 autour dudit cylindre 41 et procurant une tension sur la charge 3. Lorsque la tension voulue est obtenue on déverrouille par l'intermédiaire du bouton de commande 48 le cliquet 45 porté par la poignée 47 afin que celle-ci retrouve sa position de repos encastrée dans le couvercle 32.

Lorsqu'on désire enlever la sangle 21 ceinturant la charge 3 sur le véhicule automobile 1, on déverrouille les deux cliquets 45 et 46, par l'intermédiaire des boutons de commande 48 et 49, puis on exerce une traction sur la sangle 21 réalisant de ce fait la rotation du cylindre 41 autour de l'axe 43 et par conséquent le déroulement de ladite sangle d'arrimage 21, ceci afin de pouvoir sortir cette dernière de la fente 42 dudit cylindre 41. Le moyen de verrouillage 14 de la rotation de la bobine 22 est alors débrayé, l'action du ressort de rappel 23 sur ladite bobine 22 enroulant alors automatiquement la sangle 21 autour de celle-ci.

L'invention pourra être appliquée à un support de charge qui comporte deux barres longitudinales parallèlement disposées et maintenues par des supports intermédiaires et à tout autres types de support de charge.

## Revendications

1. Dispositif d'arrimage d'une charge (3) sur un véhicule automobile (1), constitué d'une barre (2) aux extrémités de laquelle sont raccordés au moins un premier support (10), qui intègre un enrouleur (20) verrouillable d'une sangle d'arrimage (21), et un deuxième support (30) muni d'un moyen de réception de ladite sangle d'arrimage (21), les premier et deuxième supports (10, 30) étant reliés par leurs bases à une partie du véhicule automobile (1), **caractérisé en ce que** le deuxième support (30) comprend un moyen de tension (40) de ladite sangle d'arrimage (21).

2. Dispositif d'arrimage selon la revendication 1, **caractérisé par** le fait que le moyen de réception et de tension (40) comporte une poignée de manoeuvre (47) formant une continuité de forme avec le couvercle (32) du deuxième support (30) en position fermée de ladite poignée de manoeuvre (47).

3. Dispositif d'arrimage selon la revendication 1, **caractérisé par** le fait que le premier support (10) comporte un élément de guidage (16) de la torsion de la sangle d'arrimage (21) entre l'enrouleur (20) et une fente de sortie (15) de ladite sangle d'arrimage (21) réalisée dans ledit premier support (10).

4. Dispositif d'arrimage selon la revendication 3, **caractérisé par** le fait que l'élément de guidage (16) est constitué de galets (17).

5. Dispositif d'arrimage selon la revendication 3, **caractérisé par** le fait que l'élément de guidage (16) est constitué par une surface hélicoïdale (18) appartenant au corps (11) du premier support (10).

6. Dispositif d'arrimage selon l'une des revendications 1 ou 3, **caractérisé par** le fait que l'enrouleur (20) comporte un moyen de verrouillage débrayable (14) de la rotation de ce dernier.

7. Dispositif d'arrimage selon l'une des revendications 1 ou 3, **caractérisé par** le fait que l'enrouleur (20) comporte un ressort de rappel (23) de la sangle d'arrimage (21).

## Patentansprüche

1. Vorrichtung zur Sicherung einer Last (3) auf einem Kraftfahrzeug (1), die aus einer Stange (2) besteht, an deren Enden wenigstens eine erste Stütze (10), die einen arretierbaren Wickler (20) für einen Sicherungsgurt (21) enthält, und eine zweite Stütze (30), die mit einem Mittel zur Aufnahme dieses Sicherungsgurtes (21) versehen ist, angefügt sind, wobei die erste und die zweite Stütze (10, 20) mit ihren Grundflächen mit einem Teil des Kraftfahrzeugs (1) verbunden sind, **dadurch gekennzeichnet, daß** die zweite Stütze (30) ein Mittel zum Spannen (40) des Sicherungsgurtes (21) umfaßt.

2. Sicherungsvorrichtung nach Anspruch 1, **dadurch gekennzeichnet, daß** das Aufnahme- und Spannmittel (40) einen Bedienungsgriff (47) aufweist, der in der geschlossenen Position dieses Bedienungsgriffes (47) eine Formkontinuität mit der Abdeckung (32) der zweiten Stütze (30) bildet.

3. Sicherungsvorrichtung nach Anspruch 1, **dadurch gekennzeichnet, daß** die erste Stütze (10) ein Führungselement (16) für die Verdrehung des Sicherungsgurtes (21) zwischen dem Wickler (20) und einem in der ersten Stütze (10) verwirklichten Austrittsspalt (15) dieses Sicherungsgurtes (21) aufweist.

4. Sicherungsvorrichtung nach Anspruch 3, **dadurch gekennzeichnet, daß** das Führungselement (16) von Rollen (17) gebildet wird.

5. Sicherungsvorrichtung nach Anspruch 3, **dadurch gekennzeichnet, daß** das Führungselement (16) aus einer spiralförmigen Oberfläche (18) besteht, die zum Körper (11) der ersten Stütze (10) gehört.

6. Sicherungsvorrichtung nach einem der Ansprüche 1 oder 3, **dadurch gekennzeichnet, daß** der Wickler (20) ein Mittel zur lösbaren Arretierung (14) der Drehung dieses letzteren aufweist.

7. Sicherungsvorrichtung nach einem der Ansprüche 1 oder 3, **dadurch gekennzeichnet, daß** der Wickler (20) eine Rückholfeder (23) für den Sicherungsgurt (21) aufweist.

## Claims

1. A device for securing a load (3) on a motor vehicle (1), formed by a bar (2) whose ends are connected to at least a first support (10) which incorporates a lockable winder (20) of a securing strap (21) and a second support (30) provided with a means for receiving the securing strap (21), the first and second supports (10, 30) being connected by their bases to a part of the motor vehicle (1), **characterised in that** the second support (30) comprises a means (40) for tensioning the securing strap (21).

2. A securing device as claimed in claim 1, **characterised in that** the reception and tensioning means (40) comprise a control lever (47) forming a continuous shape with the cover (32) of the second support (30) when the control lever (47) is in its closed position.

3. A securing device as claimed in claim 1, **characterised in that** the first support (10) comprises a guide member (16) for twisting the securing strap (21) between the winder (20) and an outlet slot (15) of the securing strap (21) obtained in the first support (10).

4. A securing device as claimed in claim 3, **characterised in that** the guide member (16) is formed by rollers (17).

5. A securing device as claimed in claim 3, **characterised in that** the guide member (16) is formed by a helical surface (18) belonging to the body (11) of the first support (10).

6. A securing device as claimed in one of claims 1 or 3, **characterised in that** the winder (20) comprises a releasable means (14) for locking its rotation.

7. A securing device as claimed in one of claims 1 or 3, **characterised in that** the winder (20) comprises a recall spring (23) of the securing strap (21).
